# EUROPÄISCHE PATENTANMELDUNG

(11) **EP 1 005 947 A1**
(43) Veröffentlichungstag der Anmeldung: **07.06.2000**
(21) Anmeldenummer: 99122670.5
(22) Anmeldetag: 15.11.1999
(51) Int. Cl.: B23K 37/02

(54) **Pratzen-Schutzabdeckung**

(30) Priorität: 02.12.1998 DE 19855515
(71) Anmelder: Messer Cutting & Welding AG, 64823 Gross-Umstadt (DE)
(72) Erfinder: Nickenig, Lutz Dr., 64832 Babenhausen (DE)
(74) Vertreter: Berdux, Klaus, Dipl.-Ing.

(57) **Zusammenfassung**

Die Erfindung betrifft eine Pratzen-Schutzabdeckung zur Beseitigung der Gefährdung durch Quetschen von Fußteilen bei Portalmaschinen, insbesondere bei Brennschneidmaschinen, zu deren Verfahren in Längsrichtung (X-Achse) angeordnete Längsschienen (3) durch Pratzen (2) in Höhe und Querlage einstellbar auf Schienenfüße (4) lösbar befestigt sind, wobei jede ortsfeste Pratze (2) mit einem beweglichen Radkasten der Maschine eine Quetschstelle ausbildet, welche durch einen elektrischen Fußendschalter und fußabweisende Bleche unfallgesichert ist. Erfindungsgemäß ist dadurch, daß jede der die Längsschienen (3) auf den Schienenfüßen (4) lösbar befestigenden Pratzen (2) mit einer jede Quetschstelle beseitigenden Schutzabdeckung (1) versehen ist, die Ursache der Fußteil-Unfallgefahr bei Brennschneidmaschinen mit einfachen Mitteln vollständig und kostengünstig beseitigt.

## Beschreibung

Die Erfindung betrifft eine Pratzen-Schutzabdeckung zur Beseitigung der Gefährdung des Quetschens von Fußteilen bei Portalmaschinen, insbesondere bei Brennschneidmaschinen.

Zum Längsverfahren von Portalmaschinen, insbesondere von Brennschneidmaschinen, werden Schienen aus Eisenbahnprofil als Längsführungen eingesetzt, welche mittels von sogenannten Pratzen in Höhe und Querlage einstellbar auf die Schienenfüße lösbar befestigt, in der Regel geklammert, sind. Durch den sich beim Längsverfahren der Maschine auf jeder Längsschiene bewegenden Maschinen-Radkasten bildet sich mit jeder festen Pratze jeder Längsschiene eine nach DIN EN 349 definierte Quetschstelle aus, in deren Bereich das menschliche Fußteil einer Gefährdung durch Quetschen ausgesetzt ist und die deshalb durch der EN 292-1 entsprechende Schutzmaßnahmen zu verringern bzw. wenn möglich, vollständig zu beseitigen ist.

Bisher wurden die zwischen der festen Pratze und dem verfahrbaren Radkasten bei Portalmaschinen, insbesondere bei Brennschneidmaschinen, vorhandenen Quetschstellen dadurch gesichert, daß in deren Bereich ein elektrischer Fußendschalter und fußabweisende Bleche angeordnet sind. Diese bei den Brennschneidmaschinen bisher durchgeführten Schutzmaßnahmen verringern zwar die Gefährdung des Quetschens von Fußteilen im Bereich der Quetschstellen bei Brennschneidmaschinen, beseitigen aber nicht deren Ursache.

Aufgabe der Erfindung ist es daher, eine technische Lösung im Bereich der Quetschstellen bei Brennschneidmaschinen anzubieten, welche die Quetschstelle selbst und damit die Ursache der in diesem Maschinenbereich bisher vorhandenen Gefährdung des Quetschens von Fußteilen durch Verwendung eines in der Konstruktion und Montage einfachen und in seiner Anwendung sicheren und kostengünstigen technischen Mittels beseitigt.

Erfindungsgemäß ist diese Aufgabe dadurch gelöst, daß jede der die Längsschienen auf den Schienenfüßen lösbar befestigenden Pratzen mit einer, jede Quetschstelle beseitigenden Schutzabdeckung versehen ist.

Dabei besteht die der jeweiligen Form und Anordnung der Pratze/n angepaßte und zweckentsprechend auf der Pratze geklammerte und verschraubte Schutzabdeckung aus einem Material, wie beispielsweise einem Kunststoff in Form eines Kunststoffspritzteils, welches bei Druckeinwirkung des Radkastens auf den sich im Quetschbereich befindlichen menschlichen Fuß, das Wegschieben des Fußes über die jeweilige Pratze/n gewährleistet und zudem eine ihre Beschädigung oder Zerstörung verhindernde Trittfestigkeit aufweist. Zur Beseitigung der Quetschstelle ist die erfindungsgemäße Schutzabdeckung beidseitig mit vom Pratzenfuß bis zum Pratzenkopf verlaufenden Schrägflächen mit einem Anlaufwinkel von kleiner als 45°, in der Regel von etwa 40°, ausgebildet, wodurch bei einer Druckeinwirkung des Radkastens auf den sich zwischen diesen und dem Pratzen befindlichen Fußteil, ein Einklemmen des Fußes zwischen der festen Pratze und dem beweglichen Radkasten verhindert wird, da das Fußteil durch die erfindungsgemäße Schutzabdeckung über den/die Pratzen hinweg gleitet ohne einzuklemmen, weil der für das Gleiten des Fußes über den Pratzen hinweg benötigte Kraftaufwand geringer ist als der zum Heben des Fußes.
Zur Gewährleistung einer den praktischen Anforderungen entsprechenden sicheren Anordnung und Stabilität der Schutzabdeckung auf der Pratze, ist diese mit zweckentsprechend ausgebildeten und angeordneten Stützelementen, wie beispielsweise mit innenseitigen Streben und mit zweckentsprechend ausgebildeten und angeordneten Klammerelementen, wie beispielsweise mit innerseitigen Halteklammern, versehen.
Zur Gewährleistung der einwandfreien Funktionsfähigkeit der Pratzen-Schutzabdeckung schließt diese mit der Ebene, auf der die Pratze aufgeschweißt ist, bündig ab. Zur zusätzlichen Befestigung jeder Schutzabdeckung auf jeder Pratze können die auf jeden Pratzenkopf befindlichen Schrauben Verwendung finden. Aus diesem Grund ist jede Schutzabdeckung mit entsprechenden Öffnungen im Bereich der Pratzen-Schrauben ausgebildet.

Schließlich wird die in Form von Pratzen-Schutzabdeckungen eingesetzte erfindungsgemäße Schutzeinrichtung durch ein am beweglichen Maschinen-Radkasten als ein das Ritzel in Richtung der Längsschiene abdeckendes und damit als Fußteil abweisendes Teil wirkendes Blech vervollständigt. Dabei ist der am Maschinen-Radkasten befindliche Fußteil-Abweiser so ausgebildet und angeordnet, daß der zwischen der Radkastenunterseite und der Pratzen-Schutzabdeckung bestehende Freiraum ein Fußteil-Überfahren durch den Maschinen-Radkasten ausschließt.

Die erfindungsgemäße Schutzabdeckung kann sowohl bei einzelnen als auch bei mehreren, nebeneinander angeordneten Pratzen Verwendung finden.

Die jede Quetschstelle im Bereich des menschlichen Fußteiles und damit die Ursache dieser Unfallgefährdung beseitigende erfindungsgemäße Pratzen-Schutzabdeckung ist durch ihre einfache Konstruktion kostengünstig in der Herstellung, zudem problemlos an jeder Pratze zu befestigen und besteht aus einem trittsicheren und gleitfähigen Material, wie beispielsweise Kunststoff, mit langer Einsatzdauer.

Ein Ausführungsbeispiel der Erfindung soll anhand der beigefügten Zeichnung näher erläutert werden.

Es zeigen:
- Fig. 1: eine schematische Darstellung einer mit Stütz- und Klammerelementen versehenen erfindungsgemäßen Schutzabdeckung in Doppelpratzen-Schutzanordnung mit in einem Betonunterbau befestigten Schienenfuß/,
- Fig. 2: eine schematische Darstellung der erfindungsgemäßen Schutzabdeckung in Doppelpratzen-Schutzanordnung ohne Stütz- und Klammerelemente.

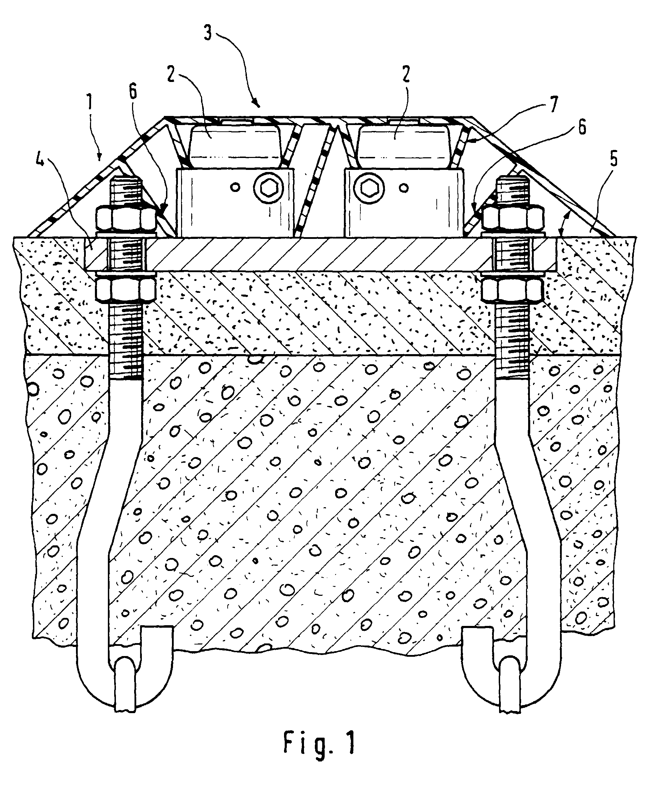

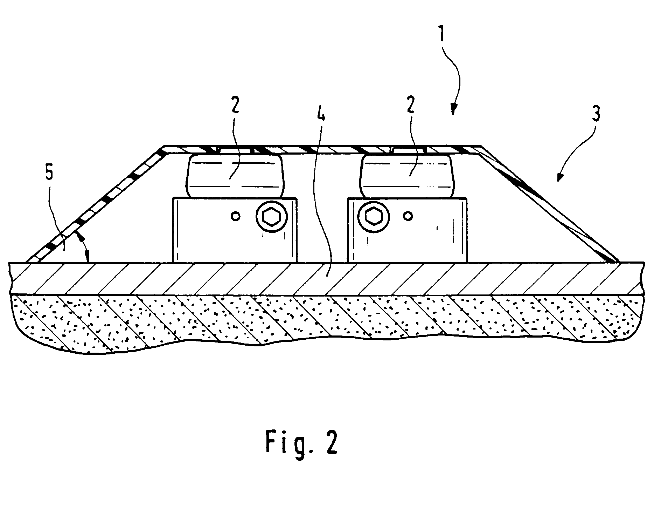

Die Fig. 1 zeigt zwei mit einer einzigen Schutzabdeckung 1 gesicherte Pratzen 2, welche eine Längsschiene 3 mit einem in einem Betonunterbau befestigten Schienenfuß 4 in üblicher Weise verbinden, auf. Die aus einem trittfesten und gleitfähigen Kunststoff bestehende Schutzabdeckung 1 ist dabei mit zweckentsprechend ausgebildeten Stützelementen 6 verschiebungssicher und mit zweckentsprechend ausgebildeten Klammerelementen 7 sitzfest an die Form der beiden Pratzen 2 angeklammert. Zur Beseitigung der Quetschstelle und damit der Gefährdung des Quetschens von sich zwischen dem beweglichen, nicht dargestellten Radkasten und dem festen Pratzen 2 befindlichen menschlichen Fußteilen, ist die Schutzabdeckung 1 beidseitig mit einer von einem Pratzenfuß bis zu einem Pratzenkopf verlaufenden Schrägfläche mit einem Anlaufwinkel 5 von etwa 40° ausgebildet, so daß bei Druckeinwirkung durch den Maschinen-Radkasten auf das Fußteil, dieser problemlos über die Schrägflächen der Schutzabdeckung 1 über die beiden Pratzen 2 aus dem Gefahrenbereich weggeschoben wird. Selbstverständlich kann der Anlaufwinkel 5 der beidseitigen Pratzen-Schrägflächen entsprechend der Form der Pratze 2 unterschiedlich sein, jedoch ist er immer kleiner als 45°, um eine das Wegschieben des Fußes über die Pratze 2 sichernde Kraftkomponente zu gewährleisten. Natürlich ist die Schutzabdeckung 1 auch nur für eine einzelne Pratze 2 einsetzbar. In der Fig. 2 ist die erfindungsgemäße Schutzabdeckung 1 in Doppelpratzen-Schutzanordnung mit beidseitigen Schrägflächen mit einem Anlaufwinkel von 40° nochmals des besseren Verständnisses wegen ohne Stütz- und Klammerelemente 6, 7 dargestellt.

### Bezugszeichen-Aufstellung

- 1: Schutzabdeckung
- 2: Pratze
- 3: Längsschiene
- 4: Schienenfuß
- 5: Anlaufwinkel
- 6: Stützelement
- 7: Klammerelement

## Patentansprüche

1. Pratzen-Schutzabdeckung zur Beseitigung der Gefährdung durch Quetschen von Fußteilen bei Portalmaschinen, insbesondere bei Brennschneidmaschinen, zu deren Verfahren in Längsrichtung (X-Achse) angeordnete Längsschienen durch Pratzen in Höhe und Querlage einstellbar lösbar auf Schienenfüße befestigt sind, wobei jede ortsfeste Pratze mit einem beweglichen Radkasten der Maschine eine Quetschstelle ausbildet, welche durch einen elektrischen Fußendschalter und fußabweisende Bleche unfallgesichert ist,
dadurch gekennzeichnet,
daß jede der die Längsschienen (3) auf den Schienenfüßen (4) lösbar befestigenden Pratzen (2) mit einer jede Quetschstelle beseitigenden Schutzabdeckung (1) versehen ist.

2. Pratzen-Schutzabdeckung nach Anspruch 1,
dadurch gekennzeichnet,
daß jede Schutzabdeckung (1) entsprechend der jeweiligen Form und Anordnung auf jeder Pratze (2) angeordnet, vorzugsweise angeklammert und aufgeschraubt, ist.

3. Pratzen-Schutzabdeckung nach Anspruch 1 oder 2,
dadurch gekennzeichnet,
daß die Schutzabdeckung (1) der Pratze (2) aus einem geeigneten Material, vorzugsweise aus einem das Gleiten eines sich im Gefahrenbereich befindlichen Fußteiles über die Pratze (2) hinweg sichernden, trittfesten Kunststoff besteht.

4. Pratzen-Schutzabdeckung nach einem der Ansprüche 1 bis 3,
dadurch gekennzeichnet,
daß der Anlaufwinkel (5) der beidseitigen Schrägflächen der Schutzabdeckung (1) kleiner als 45°, vorzugsweise etwa 40°, ist.

5. Pratzen-Schutzabdeckung nach einem der Ansprüche 1 bis 4,
dadurch gekennzeichnet,
daß die Schutzabdeckung (1) der Pratze (2) verschiedenartig ausgebildete und in ihrem Innenraum in unterschiedlicher Weise angeordnete Stütz- und Klammerelemente (6, 7) aufweist.

6. Pratzen-Schutzabdeckung nach einem der Ansprüche 1 bis 5,
dadurch gekennzeichnet,
daß die Schutzabdeckung (1) für die Abdeckung einer einzelnen Pratze (2) ausgebildet ist.

7. Pratzen-Schutzabdeckung nach einem der Ansprüche 1 bis 6,
dadurch gekennzeichnet,
daß die Schutzabdeckung (1) für die Abdeckung von mehreren, nebeneinander angeordneten Pratzen (2) ausgebildet ist.

8. Pratzen-Schutzabdeckung nach Anspruch 1,
dadurch gekennzeichnet,
daß am Radkasten der Maschine ein das Ritzel in Richtung zur Längsschiene (3) abdeckendes Teil, vorzugsweise in Form eines Blechs, zur Verhinderung des Fußteil-Überfahrens durch den Radkasten der Maschine angeordnet ist.
